# EUROPÄISCHE PATENTSCHRIFT

(11) **EP 3 055 266 B1**
(45) Veröffentlichungstag und Bekanntmachung des Hinweises auf die Patenterteilung: **21.08.2019**
(21) Anmeldenummer: 14789191.5
(22) Anmeldetag: 06.10.2014
(51) Int. Cl.: C04B 7/36, B01D 53/86, C04B 7/60, F27B 7/20

(54) **VERFAHREN ZUR ENTSTICKUNG VON BYPASSABGASEN IN EINER ANLAGE ZUR HERSTELLUNG VON ZEMENTKLINKER**
METHOD FOR THE DENITRIFICATION OF BYPASS EXHAUST GASES IN A PLANT FOR PRODUCING CEMENT CLINKER
PROCÉDÉ DE DÉNITRIFICATION D'EFFLUENTS GAZEUX DE DÉRIVATION DANS UNE INSTALLATION DE PRODUCTION DE CLINKER DE CIMENT

(30) Priorität: 08.10.2013 DE 102013016701
(43) Veröffentlichungstag der Anmeldung: 17.08.2016
(73) Patentinhaber: KHD Humboldt Wedag GmbH, 51067 Köln (DE)
(72) Erfinder: SCHÜRMANN, Heiko, 50373 Leverkusen (DE)
(86) Internationale Anmeldenummer: PCT/EP2014/071317
(87) Internationale Veröffentlichungsnummer: WO 2015/052123

(56) Entgegenhaltungen:
- EP-A2- 0 682 974
- DE-A1- 19 652 740
- DE-C1- 4 313 479
- US-A- 3 638 400
- exomission: "Stickoxidminderung", , 16. Juni 1994 (1994-06-16), XP002733679, Gefunden im Internet: URL:http://www.exomission.de/index.php/tec hnologien-2/stickoxidminderung-scr [gefunden am 2014-12-10]

## Beschreibung

Die Erfindung betrifft ein Verfahren zur Entstickung von Bypassabgasen in einer Anlage zur Herstellung von Zementklinker, wobei die Anlage in Gasflussrichtung einen Drehrohrofen zur Sinterung des Zementklinkers aufweist, und wobei der Drehrohrofen über eine Drehrohrofeneinlaufkammer mit einem Calcinator zur Entsäuerung von Rohmehl oder mit einem Drehrohrofensteigeschacht verbunden ist, und wobei das Bypassabgas im Bereich der Drehrohrofeneinlaufkammer abgezogen wird.

Zur Herstellung von Zement wird silikat- (SiO₄⁴⁻) und carbonathaltiges (CO₃²⁻) Gestein vermahlen, formal von Kohlendioxid (CO₂) durch Entsäuerung des Carbonats (CO₃²⁻) zum Oxid (-O) (in Form von gebranntem Kalk, CaO) in der Wärme befreit, und in einem anschließenden Schritt wird das Gemisch aus silikathaltigem (SiO₄⁴⁻) und carbonathaltigem (CO₃²⁻) Rohmehl zu Zementklinker (ein Mischkristall aus Calciumsilikaten verschiedener Stöchiometrie) in einem Drehrohrofen in der Wärme gesintert. Die Sinterung findet bei vergleichsweise hohen Temperaturen statt, die bis zu 1.450 °C reichen. Um diese hohen Temperaturen in einem Drehrohrofen zu erzeugen, sind im Drehrohrofen Brennerflammen notwendig, die eine Temperatur von 1.800°C bis zu 2.000°C aufweisen. Bei diesen hohen Temperaturen entstehen Stickoxide (NOₓ) durch Verbrennung des in der atmosphärischen Luft enthaltenen Stickstoffs (N₂). Neben der Verbrennung des Luftstickstoffs (N₂) ist eine weitere Stickoxidquelle ggf. im Brennstoff vorhanden, der zur Erzeugung der Wärme im Drehrohrofen verwendet wird. Dieser liegt in der Regel als chemisch gebundener Stickstoff (R-N) vor, beispielsweise als Amine (R-NH₂) in organischen Sekundärbrennstoffen. Stickoxide (NOₓ) disproportionieren in der Feuchtigkeit der atmosphärischen Luft zu verschiedenen Sauerstoffsäuren des Stickstoffs mit unterschiedlicher Stöchiometrie. Diese Sauerstoffsäuren des Stickstoffs sind die Ursache des unerwünschten sauren Regens, der bei entsprechender Menge den pH-Wert von Wald- und Ackerböden unerwünscht verringert und dadurch die Resistenz von Bäumen und Pflanzen gegenüber Krankheiten sehr stark vermindert. Es sind daher gesetzliche Auflagen zur Vermeidung von Stickoxidemissionen zu beachten, die stets strenger werden. Das bedeutet, die absoluten Emissionen sind stets weiter zu verringern.

Es ist nicht nur der Ausstoß von Stickoxiden (NOₓ) ein unerwünschtes Problem bei der Herstellung von Zement. Außer der Stickoxidemission ist es auch notwendig, den Zementklinker frei von Halogeniden (F⁻, Cl⁻, l⁻), und Sulfaten (SO₄²⁻) zu halten. Die Halogenide (F⁻, Cl⁻, I⁻), insbesondere die Chloride (Cl⁻) und die Sulfate (SO₄²⁻) der Alkali- (Li, Na, K) und Erdalkalimetalle (Mg, Ca) haben eine stark negative Auswirkung auf die Eigenschaften des aus dem Zementklinker herzustellenden Zements. Auch stören die Alkali- (LiF, LiCl, Lil, NaF, NaCl, Nal, KF, KCl, KI) und Erdalkalihalogenide (MgF₂, MgCl₂, Mgl₂, CaF₂, CaCl₂, Cal₂) und-sulfate (Li₂SO₄, Na₂SO₄, K₂SO₄, MgSO₄, CaSO₄) bei der Kondensation in der Drehofeneinlaufkammer. Die Alkali- (LiF, LiCl, Lil, NaF, NaCl, Nal, KF, KCl, KI) und Erdalkalihalogenide (MgF₂, MgCl₂, Mgl₂, CaF₂, CaCl₂, Cal₂) und -sulfate (Li₂SO₄, Na₂SO₄, K₂SO₄, MgSO₄, CaSO₄) gehen bei entsprechend hoher Temperatur im Drehrohrofen in den Gasraum über, was zunächst einen gewünschten Reinigungseffekt auf den Zementklinker bei dessen Sinterung ausübt. Beim Übergang der heißen Brennergase in einen Calcinator oder in einen Drehrohrofensteigeschacht, wo die Temperatur des Drehrohrofenabgases aufgrund der Abgabe der in dem Drehrohrofenabgas enthaltenen Wärme an die endotherme Entsäuerungsreaktion des Carbonats (CO₃²⁻) zu gebranntem Kalk (CaO) abrupt abnimmt, kondensieren die Alkali- (LiF, LiCl, Lil, NaF, NaCl, Nal, KF, KCl, KI) und Erdalkalihalogenide (MgF₂, MgCl₂, MgI₂, CaF₂, CaCl₂, Cal₂) und -sulfate (Li₂SO₄, Na₂SO₄, K₂SO₄, MgSO₄, CaSO₄) und erzeugen bei weiterer Abkühlung durch Erstarrung Anbackungen an den Wandungen der Drehrohrofeneinlaufkammer, die schließlich die Anlage zusetzen können.

Um die Alkali- (LiF, LiCl, Lil, NaF, NaCl, Nal, KF, KCl, KI) und Erdalkalihalogenide (MgF₂, MgCl₂, MgI₂, CaF₂, CaCl₂, CaI₂) und -sulfate (Li₂SO₄, Na₂SO₄, K₂SO₄, MgSO₄, CaSO₄) aus dem Prozess zu entfernen, ist es nach der Lehre in der DE 197 18 259 A2 bekannt, einen Teilgasstrom als sogenanntes Bypassabgas aus der Drehrohrofeneinlaufkammer zu entnehmen und in einem Abscheider die Alkali- (LiF, LiCl, Lil, NaF, NaCl, Nal, KF, KCl, KI) und Erdalkalihalogenide (MgF₂, MgCl₂, MgI₂, CaF₂, CaCl₂, CaI₂) und -sulfate (Li₂SO₄, Na₂SO₄, K₂SO₄, MgSO₄, CaSO₄) abzuscheiden. Das dabei übrig bleibende Gas wird nach vollständiger Befreiung von Staub in die freie Atmosphäre abgegeben. Gerade diese Gase enthalten noch einen hohen Anteil an Stickoxiden (NOₓ). Bei stets größer werdenden Anlagen zur Herstellung von Zement werden damit die Gasmengen und die Emissionsmengen so groß, dass die Emission in die freie Atmosphäre nicht mehr tolerabel ist.

Eine dritte Emission, die zu vermeiden ist, ist der gemeinsam mit der staubbefreiten Abluft der Bypassabgase passierende Ausstoß von unerwünschten chlorierten und polychlorierten Dibenzodioxinen, umgangssprachlich und vereinfacht oft als "Dioxine" bezeichnet, und der Ausstoß von unerwünschten chlorierten polychlorierten Dibenzofuranen, umgangssprachlich und vereinfacht oft als "Furane" bezeichnet.

Dioxine und Furane bilden sich bei Verbrennungsprozessen spontan in Präsenz von Kohlenstoff (C), Halogenen (F₂, Cl₂, I₂) und Sauerstoff (O₂). Die Verbrennungsführung kann bei der Verwendung von schwer im Abbrandverhalten kontrollierbarer Sekundärbrennstoffe unzureichend stattfinden, wobei beispielsweise halogenhaltige Lösemittel bei unvollständiger Verbrennung auch Halogenoxide bilden, die in der Wärme des Drehrohrofens zerfallen und dadurch freies Halogen (Cl₂) entstehen lassen. Aufgrund der recht hohen Temperaturen in einem Drehrohrofen ist aber nicht mit einer Dioxin- und Furanbildung im Drehrohrofen zu rechnen, so dass Drehrohrofenabgase und Bypassabgase frei sein sollten von Dioxinen und Furanen. Aber die zur Entstaubung von Bypassabgasen häufig eingesetzten Elektro-Staubfilter, die aufgrund der hohen statischen Ladung gelegentlich zu Überschlägen neigen, können bei der Präsenz von Halogenen (F₂, Cl₂, I₂) neben Kohlenstoffverbindungen und Sauerstoff (O₂) Dioxine und Furane erzeugen, wobei Halogene (F₂, Cl₂, I₂), speziell Chlor (Cl₂),wie oben erwähnt, aus der Verbrennung von Sekundärbrennstoffen stammen oder mit dem Rohmehl eigentragen werden. Die Dioxine und die Furane bilden sich bei mäßiger Hitze im Staubabscheider aus in dem Bypassabgas enthaltenem Kohlenmonoxid (CO), Kohlendioxid (CO₂), ggf. aus Ruß (Cₓ) und aus Chlor (Cl₂) in Verbindung mit Luftsauerstoff (O₂). Dioxine und Furane bilden sich - trotz ihrer vergleichsweise komplexen Struktur - unter diesen Bedingungen spontan.

Im Prozess entstehen also Alkali- (LiF, LiCl, Lil, NaF, NaCl, Nal, KF, KCl, KI) und Erdalkalihalogenide (MgF₂, MgCl₂, MgI₂, CaF₂, CaCl₂, CaI₂) und -sulfate (Li₂SO₄, Na₂SO₄, K₂SO₄, MgSO₄, CaSO₄), Stickoxide (NOₓ) und auch Dioxine und Furane. Diese Stoffe müssen aus dem Prozess entfernt werden und sollen nicht in die freie Atmosphäre gelangen.

In der DE 101 58 968 A2 wird vorgeschlagen, die durch die Entstaubung möglicherweise dioxin- und furanhaltigen Bypassabgase wieder in den Rekuperationsbereich eines Klinkerkühlers, der dem Drehrohrofen zum Abschrecken des frisch gesinterten Zementklinkers folgt, als Kühlluft in die Rekuperationszone einzublasen. Von dort werden die dioxin- und furanhaltigen Bypassabgase erneut in den Prozess als Sekundärluft in den Drehrohrofen eingeblasen und in der Wärme des Drehrohrofens werden die Dioxine und Furane verbrannt. Bei großen Anlagen zur Herstellung von Zement werden die Mengen der zu behandelnden Bypassabgase so groß, dass eine einfache Rückführung in den Rekuperationsbereich des Klinkerkühlers zu weiteren Problemen führt. Die rückgeführten Bypassabgase sind aufgrund des einmaligen oder mehrfachen Durchlaufs des Kreislaufs innerhalb der Anlage zur Herstellung von Zement sauerstoffarm. Würden die gesamten Bypassabgase im Kreislauf geführt, so würde sich durch verbrennungsbedingten Sauerstoffverbrauch eine sauerstoffarme und durch Verbrennung kohlendioxidreiche Atmosphäre in der Anlage bilden, die schließlich so sauerstoffarm und kohlendioxidreich ist, dass sie als Sekundärluft für den Brenner im Drehrohrofen nicht mehr einsatzfähig ist.

Eine Dioxin- und Furanvermeidung durch im Kreislauf geführte Bypassabgase führt also zu neuen Problemen, die bewältigt werden müssen.

In der Europäischen Patentanmeldung EP 0 682 974 A2) wird offenbart, wasserfreies Eisen(II)-sulfat (FeSO₄) mit einer bestimmten Korngrößenverteilung in einem Wirbelschichtreaktor mit Ammoniak (NH₃) anzureichern. Dieses mit Ammoniak (NH₃) angereicherte Eisen(II)-sulfat (FeSO₄) dient als Katalysator (FeSO₄) / Reduktionsmittel (NH₃)-Gemisch, welches das aus dem Wärmetauscher einer Anlage zur Herstellung von Zement austretende Abgas bei seiner durch die gattungsgemäße Prozessführung resultierenden Temperatur von 350°C bis 500°C katalytisch entstickt. Zu dieser Art der Entstickung sind große Mengen von Eisen(II)-sulfat (FeSO₄) notwendig. Der Eisen(II)-sulfat (FeSO₄)-Katalysator muss entweder mit dem im Wärmetauscher-Abgas vorhandenem Staub verworfen werden oder aber davon abgetrennt werden. Dadurch entsteht ein sehr erheblicher Aufwand zur Durchführung der Entstickung.

Darüberhinaus existieren im Stand der Technik Verfahren, die Bypassabgase mit den Abgasen eines Wärmetauschers, der in Gasströmungsrichtung noch hinter dem Calcinator oder hinter dem Drehrohrofensteigeschacht liegt, zu vermischen. Auf diese Weise werden die vom Gesetzgeber zulässigen Konzentrationen an unerwünschten Emissionen, hier insbesondere die Konzentration von Stickoxiden (NOₓ) im Gesamtabgas der Anlage zur Herstellung von Zement durch Verdünnen verringert. Dieses Verfahren führt aber nicht zur Verringerung der tatsächlichen Emissionen in absoluten Mengen. Des Weiteren werden vom Gesetzgeber in Zukunft auch Emissionsvorschriften erwartet, die dem Anlagenbetreiber ein Verdünnungsverbot für unerwünschte Emissionen auferlegen.

Eine Stickoxid-, Dioxin- und Furanvermeidung durch Vermischung der Bypassabgase mit anderen aus dem Prozess entweichenden Gasen ist somit auch kein gangbarer Weg.

Ein Verfahren, das zur Entstickung der Gesamtabgase einer Anlage zur Herstellung von Zement bekannt ist, ist das sogenannte SNCR-Verfahren (selective non catalytic reduction). Bei diesem Verfahren wird Ammoniak (NH₃) in Gasform, Harnstoff (CH₄N₂O) und/oder eine Ammoniumlösung (NH₄⁺) an geeigneten Stellen der Anlage zur Herstellung von Zement eingedüst. Der Ammoniak (NH₃), der Harnstoff (CH₄N₂O) und/oder die Ammoniumlösung (NH₄⁺) soll unter entsprechender Verweildauer und im richtigen Temperaturfenster mit den Stickoxiden (NOₓ) in der Abluft des Drehrohrofens, das durch die gesamte Anlage fließt, reagieren, und dabei aus Ammoniak (NH₃) und Stickoxiden (NOₓ) Stickstoff (N₂) und Wasser (H₂O) bilden. Als geeigneter Ort wurde im Stand der Technik dafür der Kopf eines Calcinators gewählt. Die hohen Strömungsgeschwindigkeiten und der große Durchmesser der Anlage (4m bis 8m) und auch die hohe Belastung der in der Anlage geführten Gase mit Rohmehl machen aber eine quantitative Umsetzung der Stickoxide (NOₓ) nur schwer beherrschbar. Die Verweilzeit und die Strömung, sowie die störende Staubatmosphäre machen eine Entstickung mit Ammoniak (NH₃) in einer Anlage zur Herstellung von Zement nur schwer beherrschbar. Entweder wird ein Stickoxidschlupf (NOₓ), ein Ammoniakschlupf (NH₃) und/oder ein Lachgasschlupf (N₂O), gegebenenfalls sogar ein Isocyansäureschlupf (HNCO) erreicht und nur mit einem unzureichendem Zeitanteil werden die gesamten in der Anlage geführten Gase durch Ammoniak (NH₃), Harnstoff (CH₄N₂O), oder Ammoniumverbindungen (NH₄⁺ X⁻) entstickt. In der übrigen Zeit findet der erwähnte Schlupf statt. Dazu kommt, dass die Verbrennung in der Anlage zur Herstellung von Zement bewusst gestuft durchgeführt wird, wodurch ein Wechsel von chemisch oxidativer und reduktiver Umgebung erfolgt und dadurch wird eine Reaktion von Kohlenmonoxid (CO) mit den Stickoxiden (NOₓ) erzwungen, in welchem Stickstoff (N₂) und Kohlendioxid (CO₂) entsteht. Die Stickoxide (NOₓ) werden mit Kohlenmonoxid (CO) chemisch reduziert. Die Entstickung mit dem SNCR-Verfahren zur Gesamtentstickung der gesamten Abgase der Ablage ist somit bisher auch nicht in zufriedenstellendem Maße gelungen.

Eine Entstickung der Gesamtabgase mit dem SNCR-Verfahren ist somit auch kein gangbarer Weg.

Auch ist die Konzentration auf die Entstickung der stark mit Stickoxiden (NOₓ) belasteten Drehrohrofenabgase über das SNCR-Verfahren kein gangbarer Weg, weil das dazu notwendige Temperaturfenster von ca. 950°C bis 1.000°C im Bypassabgas nicht erreicht wird. Bei geringeren Temperaturen findet zwar ein nicht unerheblicher Umsatz statt, aber eine quantitative chemische Reduktion der Stickoxide findet unterhalb des Temperaturfensters von ca. 950°C bis 1.000°C nicht statt. Des Weiteren muss das Bypassabgas zum Auskondensieren von Alkali- (LiF, LiCl, Lil, NaF, NaCl, Nal, KF, KCl, KI) und Erdalkalihalogeniden (MgF₂, MgCl₂, MgI₂, CaF₂, CaCl₂, CaI₂) und -sulfaten (Li₂SO₄, Na₂SO₄, K₂SO₄, MgSO₄, CaSO₄) stark gekühlt werden. Dazu wäre es denkbar, das Bypassabgas erst mit dem SNCR-Verfahren zu entsticken und dann die Alkali- (LiF, LiCI, Lil, NaF, NaCl, Nal, KF, KCl, KI) und Erdalkalihalogenide (MgF₂, MgCl₂, MgI₂, CaF₂, CaCl₂, CaI₂) und -sulfate (Li₂SO₄, Na₂SO₄, K₂SO₄, MgSO₄, CaSO₄) auszukondensieren. Aber dies würde eine Aufheizung der Bypassabgase erfordern und auch, den Prozess der Entstickung in Gegenwart der im Gasraum befindlichen Alkali- (LiF, LiCI, Lil, NaF, NaCl, Nal, KF, KCl, KI) und Erdalkalihalogeniden (MgF₂, MgCl₂, MgI₂, CaF₂, CaCl₂, CaI₂) und -sulfaten (Li₂SO₄, Na₂SO₄, K₂SO₄, MgSO₄, CaSO₄) durchzuführen, was dann wiederum zu einem Schlupf von Ammoniak (NH₃), Stickoxiden (NOₓ) und/oder Lachgas (N₂O), gegebenenfalls Isocyansäureschlupf (HNCO) führt.

Wenngleich die Entfernung von Alkali- (LiF, LiCl, Lil, NaF, NaCl, Nal, KF, KCl, KI) und Erdalkalihalogeniden (MgF₂, MgCl₂, MgI₂, CaF₂, CaCl₂, CaI₂) und -sulfaten (Li₂SO₄, Na₂SO₄, K₂SO₄, MgSO₄, CaSO₄) aus Bypassabgasen heute ein geringeres Problem darstellt, so sind die damit einhergehend notwendige Entstickung und die Vermeidung der Emission von Dioxinen und Furanen weiterhin verbesserungswürdig.

Aufgabe der Erfindung ist es daher, ein Verfahren zur Entstickung von Bypassabgasen zur Verfügung zu stellen.

Die erfindungsgemäße Aufgabe wird gelöst durch Abkühlen des Bypassabgases auf eine Temperatur zwischen 260°C und 400°C, bevorzugt zwischen 280°C bis 380°C in einer Vorrichtung zum Kühlen, vorzugsweise durch Vermischen des Bypassabgases mit Luft und/oder Wasser in einer Bypassmischkammer, Eindüsen einer ammoniak- (NH₃), harnstoff- (CH₄N₂O), und/oder ammoniumhaltigen (NH₄⁺) Substanz in das gekühlte Bypassabgas, wobei der Ammoniak (NH₃), der Harnstoff (CH₄N₂O) und/oder das Ammonium (NH₄⁺) die in dem abgekühlten Bypassabgas (112, 21, 312) befindlichen radikalischen Gasbestandteile wie nitrose Gase und radikalische Chlor-Sauerstoffverbindungen durch Hydrolyse und/oder partieller Oxidation und/oder partieller Reduktion zumindest teilweise zu nicht radikalischen Gasbestandteilen umsetzt, Einleiten des mit ammoniak- (NH₃), harnstoff- (CH₄N₂O), und/oder ammoniumhaltiger (NH₄⁺) Substanz vermischten und gekühlten Bypassabgases in eine keramische Filteranordnung, in welcher beim vorherigen Abkühlen des Bypassabgases ausgefallenes Lithiumfluorid (LiF), Lithiumchlorid (LiCI), Natriumfluorid (NaF), Natriumchlorid (NaCl), Kaliumchlorid (KCl), Lithiumsulfat (Li₂SO₄), Natriumsulfat (Na₂SO₄), Kaliumsulfat (K₂SO₄) und gegebenenfalls weitere Halogenide (I-) und Sulfate (SO₄⁻) der Alkali- (Li, Na, K) und Erdalkalimetalle (Mg, Ca) ausgefiltert werden, nicht durch die ammoniak-(NH₃) und/oder ammoniumhaltigen (NH₄) Substanz reduziertes Stickoxid (NOₓ) an einem in der keramischen Filteranordnung vorhandenen und/oder der keramischen Filteranordnung unmittelbar folgenden vorhandenen Katalysator in Präsenz der ammoniak- (NH₃), harnstoff- (CH₄N₂O) und/oder ammoniumhaltigen (NH₄) Substanz chemisch selektiv reduziert wird (SCR, selective catalytic reduction), wobei zur chemisch selektiven Reduktion der Katalysator auf Filterelementen der keramischen Filteranordnung, auf einem separatem Träger in der keramischen Filteranordnung integriert, und/oder der keramischen Filteranordnung unmittelbar folgend in einem eigenen Reaktor angeordnet ist. Weitere vorteilhafte Ausgestaltungen des Verfahrens sind in den Unteransprüchen zu Anspruch 1 angegeben.

Nach der Erfindung ist also vorgesehen, dass das aus der Drehrohrofeneinlaufkammer abgezogene Bypassabgas, das selbst einen hohen Anteil von Alkali-(LiF, LiCl, Lil, NaF, NaCl, Nal, KF, KCl, KI) und Erdalkalihalogeniden (MgF₂, MgCl₂, MgI₂, CaF₂, CaCl₂, CaI₂) und -sulfaten (Li₂SO₄, Na₂SO₄, K₂SO₄, MgSO₄, CaSO₄) im Gasraum aufweist, zunächst in einer Vorrichtung zum Kühlen abzuschrecken. Die Abkühlung der Bypassabgase findet dabei vorzugsweise in einer Mischkammer statt, in welcher sich die heißen Bypassabgase innig mit frischer atmosphärischer Luft oder mit Wasser vermischen. Dabei werden die heißen Bypassabgase auf eine Temperatur von 260°C bis 400°C, bevorzugt von 280°C bis 380°C abgekühlt. Bei dieser starken Abkühlung resublimieren die Alkali- (LiF, LiCl, Lil, NaF, NaCl, Nal, KF, KCl, KI) und Erdalkalihalogenide (MgF₂, MgCl₂, MgI₂, CaF₂, CaCl₂, CaI₂) und -sulfate (Li₂SO₄, Na₂SO₄, K₂SO₄, MgSO₄, CaSO₄) und liegen als Staub neben Rohmehl im Bypassabgas vor. Die abgekühlte, stark Staubhaltige Luft wird sodann mit einer ammoniak- (NH₃), harnstoff- (CH₄N₂O) und/oder ammoniumhaltigen (NH₄⁺) Substanz vermischt, in dem beispielsweise gasförmiges Ammoniakgas (NH₃), eine wäßrige Harnstofflösung (CH₄N₂O) oder eine wässrige Ammoniumlösung (NH₄⁺) dem zwischen zwischen 260°C und 400°C, bevorzugt 280°C und 380°C betragenden, abgekühlten Bypassgas zugeführt wird. Bei dieser für die SNCR-Reaktion deutlich zu geringen Temperatur findet nur eine teilweise bis geringe Umsetzung von Stickoxiden (NOₓ) statt. Durch die Eindüsung von Wasser zur Abschreckung und durch die Eindüsung von ammoniak- (NH₃), harnstoff- (CH₄N₂O) und/oder ammoniumhaltigen (NH₄⁺) Substanz werden aber reaktive Bestandteile des Gases, wie die Stickoxide (NOₓ), freies Chlor (Cl₂) und gegebenenfalls radikalische Gasbestandteile wie nitrose Gase und radikalische Chlor-Sauerstoffverbindungen abgefangen, die ohne eine später folgende katalytische Umsetzung sonst zu einer vermehrten Bildung von Dioxinen und Furanen führen könnten. Auch können im Bypassabgas enthaltene Schwermetalle, Halogene und Schwefel und auch Kohlenmonoxid, das allerdings aufgrund der oxidativen Bedingungen im Drehrohrofen im Regelfall im Bypassabgas nicht zu erwarten ist, aber dennoch dort gelegentlich nachgewiesen wird, die später folgenden Katalysatoren vergiften. Die teilweise Umsetzung und Hydrolyse mit einer sehr komplexen Folgechemie kurzlebiger und reaktiver Verbindungen führt aber dazu, dass die klassischen Katalysatorgifte durch chemische Umsetzung maskiert werden.

Die Verweilzeit der ammoniak- (NH₃), harnstoff- (CH₄N₂O) und/oder ammoniumhaltigen (NH₄⁺) Substanz in dem abgekühlten Bypassgas sollte so lange sein, dass ein erheblicher Anteil der radikalischen Gasbestandteile wie nitrose Gase und radikalische Chlor-Sauerstoffverbindungen umgesetzt werden. Der Eindüsung einer ammoniak- (NH₃), harnstoff- (CH₄N₂O) und/oder ammoniumhaltigen (NH₄⁺) Substanz und die gemeinsame Verweilzeit in einer Leitung folgt die Einführung des Mischgases aus ammoniak- (NH₃), harnstoff- (CH₄N₂O) und/oder ammoniumhaltigen (NH₄⁺) Substanz und dem abgekühlten, noch staubigen Bypassabgas in eine keramische Filteranordnung. Diese Filteranordnung wird deshalb aus Keramik gewählt, weil das ideale Temperaturfenster von 260°C bis 400°C, bevorzugt von 280°C bis 380°C für eine SCR-Reaktion (selective catalytic reduction) zu hoch ist für den Einsatz eines alternativen und kostengünstigeren Tuchfilters zur Entfernung des Staubes, nämlich Rohmehl und auskondensierte Alkali- (LiF, LiCl, Lil, NaF, NaCl, Nal, KF, KCl, KI) und Erdalkalihalogenide (MgF₂, MgCl₂, MgI₂, CaF₂, CaCl₂, CaI₂) und -sulfate (Li₂SO₄, Na₂SO₄, K₂SO₄, MgSO₄, CaSO₄). Der im Vergleich zum Einsatz von Tuchfiltern sicherlich kostenintensivere Einsatz eines Keramikfilters lässt sich aber damit wirtschaftlich rechtfertigen, dass auf der Filteroberfläche des Keramikfilters Katalysatoren eingesetzt werden können, welche die Reaktion der ammoniak- (NH₃), harnstoff- (CH₄N₂O) und/oder ammoniumhaltigen (NH₄⁺) Substanz mit den Stickoxiden (NOₓ) in den Bypassabgasen katalysieren. Die einsetzbaren Katalysatoren können unterschiedlicher Art sein. Die eine Art von Katalysatoren besteht im Wesentlichen aus Titandioxid (TiO₂), Vanadiumpentoxid (V₂O₅) und Wolframdioxid (WO₂) oder Mischkatalysatoren daraus. Die andere Art von Katalysatoren besteht aus Zeolithen. Katalysatoren aus (TiO₂), Vanadiumpentoxid (V₂O₅) und Wolframdioxid (WO₂) oder Mischkatalysatoren daraus oxidieren in Gegenwart von gasförmigen Halogenen (F₂, Cl₂, I₂) auch das in Bypasabgasen möglicherweise vorhandene elementare Quecksilber (Hg), das sich dann besser in den Wäschern der Rauchgasentschwefelungsanlagen bzw. in den Filtern abscheiden lässt und nur noch zu einem geringeren Anteil (ca. 10 %) an die Umgebung abgegeben wird. Ein weiterer Vorteil des Einsatzes von Titandioxid (TiO₂), Vanadiumpentoxid (V₂O₅) und Wolframdioxid (WO₂) oder Mischkatalysatoren daraus ist, dass diese Katalysatoren in Gegenwart von gasförmigen Halogenen (F₂, Cl₂, I₂) die Bildung von Dioxinen (chlorierte und polychlorierte Dibenzodioxine) und Furanen (chlorierte und polychlorierte Dibenzofurane) unterdrücken. Um diese metallischen Katalysatoren nicht zu vergiften, ist die vorherige teilweise Umsetzung des Bypassabgases mit Wasser und ammoniak- (NH₃), harnstoff- (CH₄N₂O) und/oder ammoniumhaltigen (NH₄⁺) Substanz vorteilhaft. Die Zeolith-basierten Katalysatoren sind in der Regel günstiger in der Anschaffung und sind weniger empfindlich gegenüber Abtragung und Vergiftung. Dafür aber haben sie den Nachteil, dass die Bildung von Dioxinen und Furanen nicht so gut unterdrückt wird. Zeolith-basierte Katalysatoren fördern den Zerfall von Dioxinen und Furanen im geringeren Ausmaße als die erwähnten metallischen Katalysatoren. Die wirtschaftlich günstigeren und robusteren, Zeolith-basierten Katalysatoren können daher eingesetzt werden, wenn die Trennung der Halogenide vom Bypassabgas vorher im keramischen Filter stattgefunden hat.

In Ausgestaltung des erfindungsgemäßen Verfahrens ist vorgesehen, dass der Katalysator aus Titandioxid (TiO₂), Vanadiumpentoxid (V₂O₅) und Wolframdioxid (WO₂) besteht oder ein Mischkatalysatoren daraus ist, welcher Dioxine (chlorierte und polychlorierte Dibenzodioxine) und Furane (chlorierte und polychlorierte Dibenzofurane) abbaut.

In weiterer Ausgestaltung des erfindungsgemäßen Verfahrens ist vorgesehen, dass die Verweilzeit der abgekühlten Bypassabgase in einer Leitung zwischen der Vorrichtung zum Kühlen und der keramischen Filteranordnung so gewählt ist, dass die ammoniak- (NH₃), harnstoff- (CH₄N₂O) und/oder ammoniumhaltige (NH₄⁺) Substanz die in dem abgekühlten Bypassgas befindlichen radikalischen Gasbestandteile wie nitrose Gase und radikalische Chlor-Sauerstoffverbindungen zu 50% durch Hydrolyse und/oder partieller Oxidation und/oder partieller Reduktion zu nicht radikalischen Gasbestandteilen umsetzt, bevorzugt mindestens zu 70%, besonders bevorzugt mindestens zu 95% umsetzt.

Korrespondierend zum erfindungsgemäßen Verfahren wird eine Anlage zur Herstellung von Zementklinker vorgeschlagen, wobei die Anlage in Gasflussrichtung einen Drehrohrofen zur Sinterung des Zementklinkers aufweist, und wobei der Drehrohrofen über eine Drehrohrofeneinlaufkammer mit einem Calcinator zur Entsäuerung von Rohmehl oder mit einem Drehrohrofensteigeschacht verbunden ist, und in welcher ein Bypassabgas im Bereich der Drehrohrofeneinlaufkammer abgezogen wird, gekennzeichnet durch dass eine Vorrichtung zum Abkühlen des Bypassabgases vorgesehen ist, welche das Bypassabgas auf eine Temperatur zwischen 260°C und 400°C, bevorzugt zwischen 280°C und 380°C in abkühlt, vorzugsweise eine Mischkammer, welche das Bypassabgas mit Luft und/oder Wasser vermischt, dass darauf folgend eine Vorrichtung zum Eindüsen einer ammoniak- (NH₃), harnstoff- (CH₄N₂O) und/oder ammoniumhaltigen (NH₄⁺) Substanz in das gekühlte Bypassabgas vorgesehen ist, wobei der Ammoniak (NH₃), der Harnstoff (CH₄N₂O) oder das Ammonium (NH₄⁺) die in dem abgekühlten Bypassabgas befindlichen radikalischen Gasbestandteile wie nitrose Gase und radikalische Chlor-Sauerstoffverbindungen durch Hydrolyse und/oder partieller Oxidation und/oder partieller Reduktion zumindest teilweise zu nicht radikalischen Gasbestandteilen umsetzt, dass darauf folgend eine keramische Filteranordnung vorgesehen ist, welche das beim vorherigen Abkühlen des Bypassabgases ausgefallene Lithiumfluorid (LiF), Lithiumchlorid (LiCI), Natriumfluorid (NaF), Natriumchlorid (NaCl), Kaliumchlorid (KCl), Lithiumsulfat (Li₂SO₄), Natriumsulfat (Na₂SO₄), Kaliumsulfat (K₂S0₄) und gegebenenfalls weitere Halogenide (I-) und Sulfate (SO₄⁻) der Alkali- (Li, Na, K) und Erdalkalimetalle (Mg, Ca) ausfiltert, und das durch die ammoniak- (NH₃), harnstoff- (CH₄N₂O) und/oder ammoniumhaltige (NH₄⁺) Substanz noch nicht reduzierte Stickoxid (NOₓ) an einem in der keramischen Filteranordnung vorhandenen und/oder der keramischen Filteranordnung unmittelbar folgenden vorhandenen Katalysator chemisch selektiv reduziert (SCR, selective catalytic reduction), wobei der Katalysator auf Filterelementen der keramischen Filteranordnung, auf einem separatem Träger in der keramischen Filteranordnung integriert, und/oder der keramischen Filteranordnung unmittelbar folgend in einem eigenen Reaktor angeordnet ist.

In Ausgestaltung der erfindungsgemäßen Anlage ist vorgesehen, dass der Katalysator aus Titandioxid (TiO₂), Vanadiumpentoxid (V₂O₅) und Wolframdioxid (WO₂) besteht oder ein Mischkatalysator daraus ist, welcher Dioxine (chlorierte und polychlorierte Dibenzodioxine) und Furane (chlorierte und polychlorierte Dibenzofurane) abbaut.

In weiterer Ausgestaltung der erfindungsgemäßen Anlage ist vorgesehen, durch Auslegung einer Leitung die Verweilzeit der abgekühlten Bypassabgase in der Leitung zwischen der Vorrichtung zum Kühlen und der keramischen Filteranordnung so gewählt ist, dass die ammoniak- (NH₃), harnstoff- (CH₄N₂O) und/oder ammoniumhaltige (NH₄⁺) Substanz die in dem abgekühlten Bypassgas befindlichen radikalischen Gasbestandteile wie nitrose Gase und radikalische Chlor-Sauerstoffverbindungen zu 50% durch Hydrolyse und/oder partieller Oxidation und/oder partieller Reduktion zu nicht radikalischen Gasbestandteilen umsetzt, bevorzugt mindestens zu 70%, besonders bevorzugt mindestens zu 95% umsetzt.

Die Erfindung wird anhand der folgenden Figuren näher erläutert. Es zeigt:
- Fig. 1: ein Fließdiagramm einer ersten Anlagenkonfiguration zur Durchführung des erfindungsgemäßen Verfahrens,
- Fig. 2: ein Fließdiagramm einer zweite Anlagenkonfiguration zur Durchführung des erfindungsgemäßen Verfahrens,
- Fig. 3: ein Fließdiagramm einer dritte Anlagenkonfiguration zur Durchführung des erfindungsgemäßen Verfahrens.

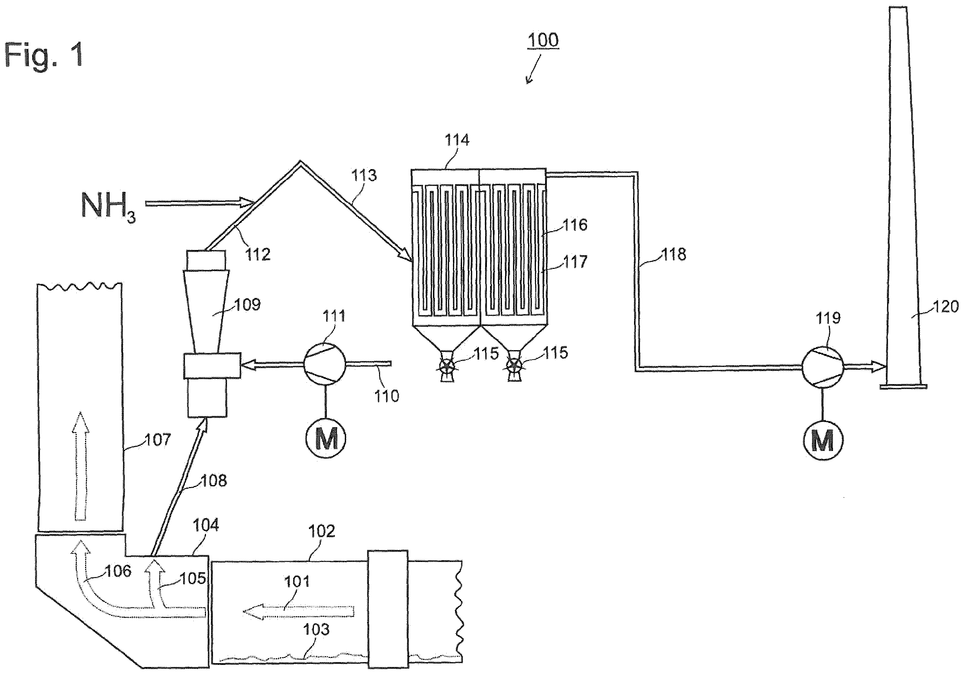

In **Figur 1** ist ein Fließdiagramm 100 einer ersten Anlagenkonfiguration zur Durchführung des erfindungsgemäßen Verfahrens dargestellt. Der prinzipielle Aufbau einer Anlage zur Herstellung von Zement wird hier als bekannt vorausgesetzt. Heiße Verbrennungsgase 101 durchlaufen einen Drehrohrofen 102 und heizen diesen zum Sintern des im Drehrohrofen 102 befindlichen Zementklinkers 103. Die Verbrennungsgase 101 verlassen den Drehrohrofen 103 am linken Ende, wo der Drehrohrofen 103 in einer Drehrohrofeneinlaufkammer 104 mündet. In der Drehrohrofeneinlaufkammer 104 kühlen die Verbrennungsgase stark ab, weil sie dort auf Gase aus einem hier nicht dargestellten Wärmetauscher treffen. Beim Abkühlen der Verbrennungsgase 101 kondensieren Alkali- (LiF, LiCI, Lil, NaF, NaCl, Nal, KF, KCl, KI) und Erdalkalihalogenide (MgF₂, MgCl₂, MgI₂, CaF₂, CaCl₂, CaI₂) und -sulfate (Li₂SO₄, Na₂SO₄, K₂SO₄, MgSO₄, CaSO₄) und werden dem Gasstrom 105 folgend als Bypassabgase aus der Drehrohrofeneinlaufkammer 104 abgezogen. Die restlichen Drehrohrofenabgase 101 folgen dem Gasstrom 106 und steigen im Calcinator 107 oder dem Drehrohrofensteigeschacht auf. Das Bypassabgas folgt dem Gassstrom 108 in eine Vorrichtung zum Kühlen auf eine Temperatur zwischen 260°C und 400°C, bevorzugt zwischen 280°C und 380°C. Vorliegend ist die Vorrichtung zum Kühlen eine Mischkammer 109, welche das Bypassabgas aus Gasstrom 108 innig mit atmosphärischer Luft 110 oder mit Wasser mischt, wobei die atmosphärische Luft 110 oder das Wasser über einen motorgetriebenen Verdichter 111 in die Mischkammer 109 eingeblasen wird. Am oberen Ausgang der Mischkammer 109 hat das Bypassabgas die erwünschte Temperatur von 280°C bis 380°C. Um den Tempraturabfall durch das Eindüsen von ammoniak- (NH₃), harnstoff- (CH₄N₂O) und/oder ammoniumhaltigen (NH₄⁺) Substanz, in Figur 1 als "NH₃" für alle Arten der Eindüsung von ammoniak- (NH₃), harnstoff- (CH₄N₂O) und/oder ammoniumhaltigen (NH₄⁺) Substanz bezeichnet, auszugleichen, kann die Austrittstemperatur an der Mischklammer auch so hoch sein, dass die Mischgase 112 in der Leitung 113 die erwünschte Temperatur von von 260°C bis 400°C, bevorzugt von 280°C bis 380° annehmen. Leitung 113 führt zu einer keramischen Filteranordnung 114, in welcher die kondensierten und erstarrten oder resublimierten Alkali- (LiF, LiCI, Lil, NaF, NaCl, Nal, KF, KCl, KI) und Erdalkalihalogenide (MgF₂, MgCl₂, MgI₂, CaF₂, CaCl₂, CaI₂) und -sulfate (Li₂SO₄, Na₂SO₄, K₂SO₄, MgSO₄, CaSO₄) aus dem Gasstrom gefiltert und kontinuierlich oder diskontinuierlich über die Zellradschleusen 115 aus der Filteranordnung 114 entfernt werden. In der vorliegenden Anlagenkonfiguration ist es vorgesehen, dass ein Katalysator 116 auf keramischen Filterelementen 117 aufgebracht ist, um die Stickoxide und die weiteren unerwünschten Gasbestandteile im Bypassabgas umzusetzen. Bei der Kombination von keramischem Filterelementen 117 und Katalysator 116 ist es von Vorteil, wenn der Katalysator 116 aus Titandioxid (TiO₂), Vanadiumpentoxid (V₂O₅) und Wolframdioxid (WO₂) besteht oder ein Mischkatalysator daraus ist, welcher die Ausbildung von Dioxinen (chlorierte und polychlorierte Dibenzodioxine) und Furanen (chlorierte und polychlorierte Dibenzofurane) unterdrückt. Denn an dieser Stelle befinden sich möglicherweise Chlor (Cl₂) oder Chlorverbindungen in unmittelbarer Nähe zu Kohlenstoffverbindungen wie Kohlendioxid (CO₂) Kohlenmonoxid (CO) und ggf. Ruß (Cₓ) und auch in unmittelbarer Nähe zu Sauerstoff (O₂) aus er atmosphärischen Luft. Damit an dieser Stelle keine Dioxine oder Furane gebildet werden, werden die metallischen Katalysatoren eingesetzt, weil diese den Zerfall der Dioxine und der Furane unterstützen. Das Abgas aus der Filteranordnung wird sodann über eine Leitung 118 durch einen entsprechend geschalteten, motorischen Verdichter 119 über einen Kamin 120 in die freie Atmosphäre verworfen.

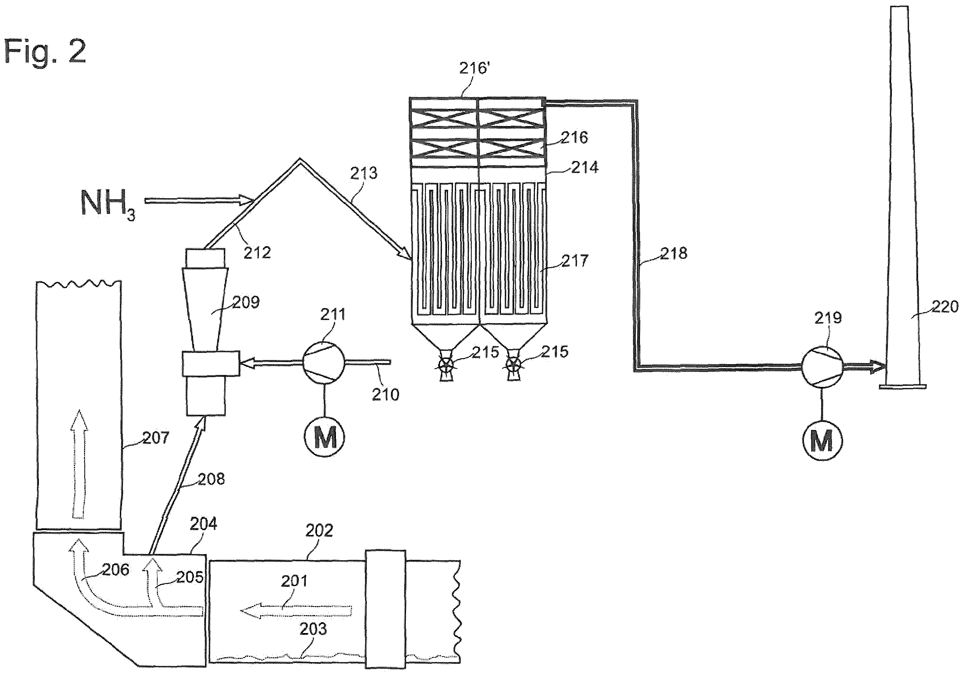

Eine zur Anlagenkonfiguration in Figur 1 alternative Anlagenkonfiguration 200 ist in **Figur 2** dargestellt. Die gegenüber der Anlagenkonfiguration 100 in Figur 1 veränderten Elemente sind in Figur 2 durch Fettdruck hervorgehoben. Im Wesentlichen laufen in dieser Anlagenkonfiguration 200 die gleichen Verfahrensschritte ab wie in Figur 1, mit dem Unterschied, dass der Katalysator 216 zwar in der Filteranordnung 214 integriert ist, aber dennoch ist der Katalysator 216 auf einem Träger 216' räumlich von den Filterelementen 217 getrennt. Auf diese Weise kommt der Katalysator 216 nicht in unmittelbaren Kontakt mit dem auszufilternden Staub. Die Katalysatorwirkung wird dadurch nicht durch Staubablagerung verringert und die Dioxin- und Furanbildung wird weiter verringert, weil die im Wesentlichen als feste Halogenide vorliegenden Halogene, insbesondere Chloride, vom Katalysator entfernt sind. Es befinden sich nur noch gasförmige Halogenide, beispielsweise Chlor (Cl2) im Gas, sofern es nicht bei der Eindüsung von ammoniak- (NH₃), harnstoff- (CH₄N₂O) und/oder ammoniumhaltigen (NH₄⁺) Substanz nach der Mischkammer 209 in Leitung 212 umgesetzt wurde. Sofern gasförmige Halogene, hier im Wesentlichen Chlor, bereits chemisch als Halogenide ausgeschieden wurden, ist es möglich, dass in der getrennten Anordnung von keramischen Filterelementen 217 und Katalysator 216 der Katalysator 216 auch auf Zeolith-Basis bestehen kann, was wirtschaftlich gegebenenfalls günstiger ist und es ist keine so schnelle Katalysatorvergiftung zu erwarten. Nach Passage der Einheit mit den Katalysatoren 216 verlässt das Bypassabgas die Anlage über Leitung 218, welches über den motorisch getriebenen Verdichter 219 und über den Kamin 220 in die freie Atmosphäre verworfen wird.

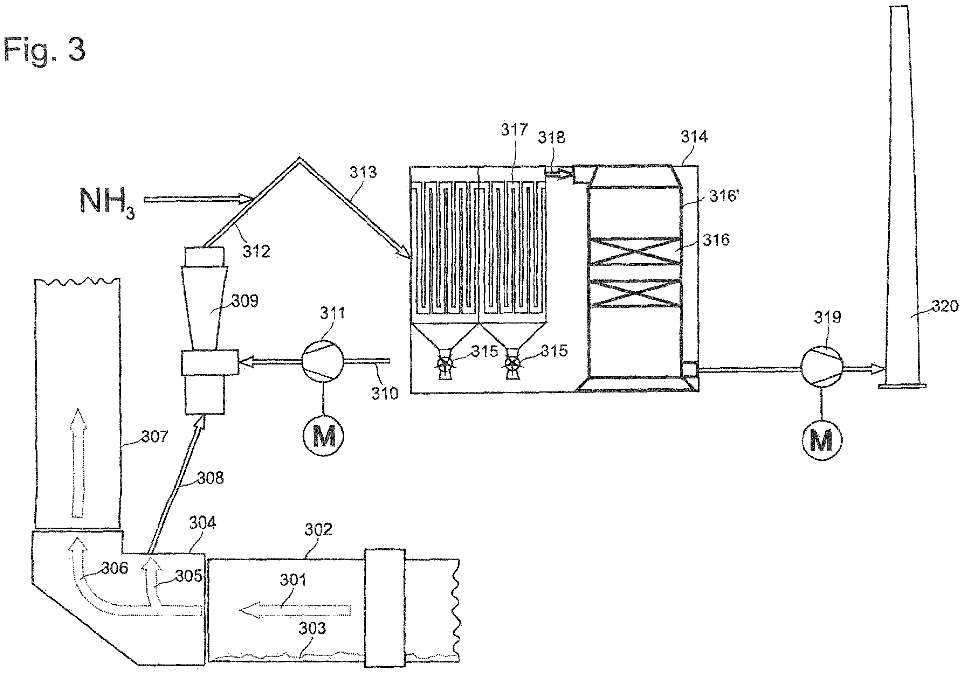

In Figur 3 ist schließlich eine noch weitere Anlagenkonfiguration 300 dargestellt, welche sich von den vorherigen Konfigurationen um einen getrennten Katalysator 316 unterscheidet. Dieser getrennte Katalysator 316 ist in einem eigenen Reaktor 316' als Teil der keramischen Filteranordnung 314 untergebracht, was zwar baulich komplexer ist, aber zur Wartung besser zu handhaben ist. Die vollständige Trennung von den Filterelementen 317 erlaubt einen Einsatz von fast beliebigen Katalysatoren, weil die Trennung einen staubfreien Betrieb des Katalysators 316 ermöglicht, dadurch ist weniger mit einer Verstaubung, Vergiftung und auch weniger mit der Katalyse des Abbaus von Dioxinen oder Furanen zu rechnen.

Die Erfindung macht sich im Wesentlichen den Gedanken zu nutze, das Bypassabgas erst abzukühlen, um die beim Abkühlen kondensierenden und erstarrenden oder resublimierenden Alkali- (LiF, LiCI, Lil, NaF, NaCl, Nal, KF, KCl, KI) und Erdalkalihalogenide (MgF₂, MgCl₂, MgI₂, CaF₂, CaCl₂, CaI₂) und -sulfate (Li₂SO₄, Na₂SO₄, K₂SO₄, MgSO₄, CaSO₄) abzuscheiden. Erst danach findet eine katalytische Umsetzung der unerwünschten Stickoxide über ein SCR-Verfahren statt. Da das SCR-Verfahren nicht einsetzbar wäre, wenn gattungsgemäße Tuchfilter eingesetzt würden, weil die Tuchfilter der Temperatur nicht standhalten würden, wird erfindungsgemäß ein keramischer Filter eingesetzt. Der wirtschaftliche Nachteil des keramischen Filters gegenüber einem Tuchfilter wird aber dadurch ausgeglichen, dass der keramischen Filter gleichzeitig als Träger für den Katalysator dienen kann. Um die Schadstoffe möglichst quantitativ abzuscheiden, verweilt das Reduktionsmittel, die ammoniak- (NH₃), harnstoff- (CH₄N₂O) und/oder ammoniumhaltigen (NH₄⁺) Substanz, mit dem abgekühlten Bypassabgas vor der Entstaubung und Abscheidung der Halogenide und Sulfate.

**BEZUGSZEICHENLISTE**

| | | | |
|---|---|---|---|
| 100 | Anlagenkonfiguration | 118 | Leitung |
| 101 | Verbrennungsgase | 119 | Verdichter |
| 102 | Drehrohrofen | 120 | Kamin |
| 103 | Zementklinker | | |
| 104 | Drehrohrofeneinlaufkammer | 200 | Anlagenkonfiguration |
| 105 | Gasstrom | 201 | Verbrennungsgase |
| 106 | Gasstrom | 202 | Drehrohrofen |
| 107 | Calcinator | 203 | Zementklinker |
| 108 | Gasstrom | 204 | Drehrohrofeneinlaufkammer |
| 109 | Mischkammer | 205 | Gasstrom |
| 110 | atmosphärische Luft / Wasser | 206 | Gasstrom |
| | | 207 | Calcinator |
| 111 | Verdichter | 208 | Gasstrom |
| 112 | Mischgase | 209 | Mischkammer |
| 113 | Leitung | 210 | atmosphärische Luft / Wasser |
| 114 | Filteranordnung | | |
| 115 | Zellradschleuse | 211 | Verdichter |
| 116 | Katalysator | 212 | Mischgase |
| 117 | Filterelemente | 213 | Leitung |
| 214 | Filteranordnung | 307 | Calcinator |
| 215 | Zellradschleuse | 308 | Gasstrom |
| 216 | Katalysator | 309 | Mischkammer |
| 216' | Träger | 310 | atmosphärische Luft /Wasser |
| 217 | Filterelemente | | |
| 118 | Leitung | 311 | Verdichter |
| 119 | Verdichter | 312 | Mischgase |
| 220 | Kamin | 313 | Leitung |
| | | 314 | Filteranordnung |
| 300 | Anlagenkonfiguration | 315 | Zellradschleuse |
| 301 | Verbrennungsgase | 316 | Katalysator |
| 302 | Drehrohrofen | 316' | Reaktor |
| 303 | Zementklinker | 317 | Filterelemente |
| 304 | Drehrohrofeneinlaufkammer | 318 | Leitung |
| 305 | Gasstrom | 319 | Verdichter |
| 306 | Gasstrom | 320 | Kamin |

## Patentansprüche

1. Verfahren zur Entstickung von Bypassabgasen (105, 205, 305) in einer Anlage zur Herstellung von Zementklinker,
wobei die Anlage in Gasflussrichtung einen Drehrohrofen vor einem Calcinator (102, 202, 302) zur Sinterung des Zementklinkers (103, 203, 303) aufweist, und
wobei der Drehrohrofen (102, 202, 302) über eine Drehrohrofeneinlaufkammer (104, 204, 304) mit dem Calcinator (107, 207, 307) zur Entsäuerung von Rohmehl oder mit einem Drehrohrofensteigeschacht verbunden ist, und
wobei das Bypassabgas im Bereich der Drehrohrofeneinlaufkammer (104, 204, 304) abgezogen wird,
**gekennzeichnet durch**
- Abkühlen des Bypassabgases (105, 205, 305) auf eine Temperatur zwischen 260°C bis 400°C in einer Vorrichtung zum Kühlen,
- Eindüsen einer ammoniak- (NH₃), harnstoff- (CH₄N₂O) und/oder ammoniumhaltigen (NH₄⁺) Substanz in das gekühlte Bypassabgas (112, 21, 312),
wobei der Ammoniak (NH₃), der Harnstoff (CH₄N₂O) und/oder das Ammonium (NH₄⁺) die in dem abgekühlten Bypassgas (112, 21, 312) befindlichen radikalischen Gasbestandteile wie nitrose Gase und radikalische Chlor-Sauerstoffverbindungen durch Hydrolyse und/oder partielle Oxidation und/oder partielle Reduktion zumindest teilweise zu nicht radikalischen Gasbestandteilen umsetzt,
- Einleiten des mit ammoniak- (NH₃), harnstoff- (CH₄N₂O) und/oder ammoniumhaltiger (NH₄⁺) Substanz vermischten und gekühlten Bypassabgases (112, 21, 312) in eine keramische Filteranordnung (114, 214, 314), in welcher
a) beim vorherigen Abkühlen des Bypassabgases (112, 21, 312) ausgefallenes Lithiumfluorid (LiF), Lithiumchlorid (LiCI), Natriumfluorid (NaF), Natriumchlorid (NaCl), Kaliumchlorid (KCl), Lithiumsulfat (Li₂SO₄), Natriumsulfat (Na₂SO₄), Kaliumsulfat (K₂S0₄) und gegebenenfalls weitere Halogenide in Form von -iodiden (I-) und Sulfate (SO₄⁻) der Erdalkalimetalle Mg und Ca ausgefiltert werden,
b) noch nicht durch die ammoniak- (NH₃), harnstoff- (CH₄N₂O) und/oder ammoniumhaltigen (NH₄⁺) Substanz umgesetzten Stickoxide (NOₓ) an einem in der keramischen Filteranordnung (114) vorhandenen und/oder der keramischen Filteranordnung (214, 314) unmittelbar folgenden vorhandenen Katalysator (116, 216, 316) chemisch selektiv reduziert werden (SCR),
wobei zur chemisch selektiven Reduktion der Katalysator (116, 216, 316)
b.1) auf Filterelementen (117) der keramischen Filteranordnung (114),
b.2) auf einem separatem Träger (216') in der keramischen Filteranordnung (214) integriert, und/oder
b.3) der keramischen Filteranordnung (314) unmittelbar folgend in einem eigenen Reaktor (316')
angeordnet ist.

2. Verfahren nach Anspruch 1,
**dadurch gekennzeichnet, dass**
der Katalysator (116, 216, 316) aus Titandioxid (TiO₂), Vanadiumpentoxid (V₂O₅) und Wolframdioxid (WO₂) besteht oder ein Mischkatalysator daraus ist, welcher Dioxine (chlorierte und polychlorierte Dibenzodioxine) und Furane (chlorierte und polychlorierte Dibenzofurane) abbaut.

3. Verfahren nach Anspruch 1 oder 2,
**dadurch gekennzeichnet, dass**
die Verweilzeit der abgekühlten Bypassabgase (112, 212, 312) in einer Leitung (113, 213, 313) zwischen der Vorrichtung zum Kühlen (109, 209, 309) und der keramischen Filteranordnung (114, 214, 314) so gewählt ist, dass die ammoniak- (NH₃), harnstoff- (CH₄N₂O) und/oder ammoniumhaltige (NH₄⁺) Substanz die in dem abgekühlten Bypassgas (112, 212, 312) befindlichen radikalischen Gasbestandteile wie nitrose Gase und radikalische Chlor-Sauerstoffverbindungen zu 50% durch Hydrolyse und/oder partieller Oxidation und/oder partieller Reduktion zu nicht radikalischen Gasbestandteilen umsetzt, bevorzugt mindestens zu 70%, besonders bevorzugt mindestens zu 95% umsetzt.

4. Verfahren nach einem der Ansprüche 1 bis 3,
**gekennzeichnet durch**
Abkühlen des Bypassabgases auf eine Temperatur zwischen 280°C bis 380°C

5. Verfahren nach einem der Anbrüche 1 bis 4,
**gekennzeichnet, durch**
Vermischen des Bypassabgases mit Luft und/oder Wasser in einer Mischkammer (109, 209, 309).

6. Anlage zur Herstellung von Zementklinker,
aufweisend einen Drehrohrofen (102, 202, 302), der in Gasflussrichtung vor einem Calcinator zur Sinterung des Zementklinkers (103, 203, 303) angeordnet ist, wobei
der Drehrohrofen (102, 202, 302) über eine Drehrohrofeneinlaufkammer (104, 204, 304) mit dem Calcinator (107, 207, 307) zur Entsäuerung von Rohmehl oder mit einem Drehrohrofensteigeschacht verbunden ist, und
in welcher Drehrohrofeneinlaufkammer (104, 204, 304) ein Bypassabgas (105, 205, 305) im Bereich der Drehrohrofeneinlaufkammer (104, 204, 304) abgezogen wird,
**dadurch gekennzeichnet, dass**
eine Vorrichtung zum Abkühlen des Bypassabgases (105, 205, 305) das Bypassabgas (105, 205, 305) auf eine Temperatur zwischen 260°C bis 400°C abkühlt,
eine darauffolgende Vorrichtung zum Eindüsen einer ammoniak- (NH₃⁺), harnstoff- (CH₄N₂O) und/oder ammoniumhaltigen (NH₄⁺) Substanz in das gekühlte Bypassabgas (112, 212, 312) wobei der Ammoniak (NH₃), der Harnstoff (CH₄N₂O) und/oder das Ammonium (NH₄⁺) die in dem abgekühlten Bypassgas (112, 21, 312) befindlichen radikalischen Gasbestandteile wie nitrose Gase und radikalische Chlor-Sauerstoffverbindungen durch Hydrolyse und/oder partielle Oxidation und/oder partielle Reduktion zumindest teilweise zu nicht radikalischen Gasbestandteilen umsetzt, und
eine darauffolgende keramische Filteranordnung (114, 214, 314)
a) die beim vorherigen Abkühlen des Bypassabgases (112, 21, 312) ausgefallenes Lithiumfluorid (LiF), Lithiumchlorid (LiCI), Natriumfluorid (NaF), Natriumchlorid (NaCl), Kaliumchlorid (KCl), Lithiumsulfat (Li₂SO₄), Natriumsulfat (Na₂SO₄), Kaliumsulfat (K₂S0₄) und gegebenenfalls weitere Halogenide in Form von -iodiden (I-) und Sulfate (SO₄⁻) der Erdalkalimetalle Mg, Ca ausfiltert, und
b) die noch nicht durch die ammoniak- (NH₃), harnstoff- (CH₄N₂O) und/oder ammoniumhaltigen (NH₄⁺) Substanz umgesetzten Stickoxide (NOₓ) an einem in der keramischen Filteranordnung (114) vorhandenen und/oder der keramischen Filteranordnung (214, 314) unmittelbar folgenden vorhandenen Katalysator (116, 216, 316) chemisch selektiv reduziert (SCR),
wobei der Katalysator (116, 216, 316)
b.1) auf Filterelementen (117) der keramischen Filteranordnung (114),
b.2) auf einem separatem Träger (216') in der keramischen Filteranordnung (214) integriert, und/oder
b.3) der keramischen Filteranordnung (314) unmittelbar folgend in einem eigenen Reaktor (316')
angeordnet ist.

7. Anlage nach Anspruch 6,
**dadurch gekennzeichnet, dass**
der Katalysator (116, 216, 316) aus Titandioxid (TiO₂), Vanadiumpentoxid (V₂O₅) und Wolframdioxid (WO₂) besteht oder ein Mischkatalysator daraus ist, welcher Dioxine (chlorierte und polychlorierte Dibenzodioxine) und Furane (chlorierte und polychlorierte Dibenzofurane) abbaut.

8. Anlage nach Anspruch 6 oder 7,
**dadurch gekennzeichnet, dass**
durch Auslegung einer Leitung (113, 213, 313) die Verweilzeit der abgekühlten Bypassabgase (112, 212, 312) in der Leitung (113, 213, 313) zwischen der Vorrichtung zum Kühlen (109, 209, 309) und der keramischen Filteranordnung (114, 214, 314) so gewählt ist, dass die ammoniak- (NH₃), harnstoff- (CH₄N₂O) und/oder ammoniumhaltige (NH₄⁺) Substanz die in dem abgekühlten Bypassgas (112, 212, 312) befindlichen radikalischen Gasbestandteile wie nitrose Gase und radikalische Chlor-Sauerstoffverbindungen zu 50% durch Hydrolyse und/oder partieller Oxidation und/oder partieller Reduktion zu nicht radikalischen Gasbestandteilen umsetzt, bevorzugt mindestens zu 70%, besonders bevorzugt mindestens zu 95% umsetzt.

9. Anlage nach einem der Ansprüche 6 bis 7,
**dadurch gekennzeichnet, dass**
die Vorrichtung zum Abkühlen des Bypassabgases (105, 205, 305) das Bypassgas (105, 205, 305) auf eine Temperatur zwischen 280°C bis 380°C abkühlt.

10. Anlage nach einem der Ansprüche 6 bis 8,
**dadurch gekennzeichnet, dass**
eine Mischkammer (109, 209, 309) das Bypassabgas (105, 205, 305) mit atmosphärischer Luft und/oder Wasser vermischt.

## Claims

1. Process for the denitrification of bypass exhaust gases (105, 205, 305) in a plant for producing cement clinker,
where the plant has, in the gas flow direction, a rotary tube furnace upstream of a calciner (102, 202, 302) for sintering of the cement clinker (103, 203, 303), and
where the rotary tube furnace (102, 202, 302) is connected via a rotary tube furnace inlet chamber (104, 204, 304) to the calciner (107, 207, 307) for deacidification of raw meal or to a rotary tube furnace riser shaft, and
where the bypass exhaust gas is taken off in the region of the rotary tube furnace inlet chamber (104, 204, 304),
**characterized by**
- cooling of the bypass exhaust gas (105, 205, 305) to a temperature in the range from 260°C to 400°C in a cooling apparatus,
- injection of an ammonia- (NH₃) , urea- (CH₄N₂O) and/or ammonium-containing (NH₄⁺) substance into the cooled bypass exhaust gas (112, 21, 312),
where the ammonia (NH₃), the urea (CH₄N₂O) and/or the ammonium (NH₄⁺) at least partially converts the free-radical gas constituents present in the cooled bypass gas (112, 21, 312), for example nitrous gases and free-radical chlorine-oxygen compounds into non-free-radical gas constituents by hydrolysis and/or partial oxidation and/or partial reduction,
- introduction of the cooled bypass exhaust gas (112, 21, 312) which has been mixed with ammonia- (NH₃), urea- (CH₄N₂O) and/or ammonium-containing (NH₄⁺) substance into a ceramic filter arrangement (114, 214, 314) in which
a) lithium fluoride (LiF), lithium chloride (LiCl), sodium fluoride (NaF), sodium chloride (NaCl), potassium chloride (KCl), lithium sulfate (Li₂SO₄), sodium sulfate (Na₂SO₄), potassium sulfate (K₂S0₄) and possibly further halides in the form of iodides (I⁻) and sulfates (SO₄⁻) of the alkaline earth metals Mg and Ca which has/have precipitated during prior cooling of the bypass exhaust gas (112, 21, 312) are filtered out,
b) nitrogen oxides (NOₓ) which have not yet been converted by means of the ammonia- (NH₃), urea- (CH₄N₂O) and/or ammonium-containing (NH₄⁺) substance are chemically selectively reduced (SCR) over a catalyst (116, 216, 316) present in the ceramic filter arrangement (114) and/or present directly downstream of the ceramic filter arrangement (214, 314), where the catalyst (116, 216, 316) for the chemically selective reduction is arranged
b.1) on filter elements (117) of the ceramic filter arrangement (114),
b.2) on a separate support (216') integrated into the ceramic filter arrangement (214) and/or
b.3) directly downstream of the ceramic filter arrangement (314) in a dedicated reactor (316').

2. Process according to Claim 1, **characterized in that** the catalyst (116, 216, 316) consists of titanium dioxide (TiO₂), vanadium pentoxide (V₂O₅) and tungsten dioxide (WO₂) or is a mixed catalyst made up of these which degrades dioxins (chlorinated and polychlorinated dibenzodioxins) and furans (chlorinated and polychlorinated dibenzofurans) .

3. Process according to Claim 1 or 2, **characterized in that** the residence time of the cooled bypass exhaust gases (112, 212, 312) in a line (113, 213, 313) between the cooling apparatus (109, 209, 309) and the ceramic filter arrangement (114, 214, 314) is selected so that the ammonia- (NH₃), urea-(CH₄N₂O) and/or ammonium-containing (NH₄⁺) substance converts the free-radical gas constituents such as nitrous gases and free-radical chlorine-oxygen compounds present in the cooled bypass gas (112, 212, 312) into non-free-radical gas constituents to an extent of 50% by hydrolysis and/or partial oxidation and/or partial reduction, preferably to an extent of at least 70%, particularly preferably to an extent of at least 95%.

4. Process according to any of Claims 1 to 3, **characterized by** cooling of the bypass exhaust gas to a temperature in the range from 280°C to 380°C.

5. Process according to any of Claims 1 to 4, **characterized by** mixing of the bypass exhaust gas with air and/or water in a mixing chamber (109, 209, 309) .

6. Plant for producing cement clinker,
having a rotary tube furnace (102, 202, 302), which, in the gas flow direction, is arranged upstream of a calciner for sintering of the cement clinker (103, 203, 303), where
the rotary tube furnace (102, 202, 302) is connected via a rotary tube furnace inlet chamber (104, 204, 304) to the calciner (107, 207, 307) for deacidification of raw meal or to a rotary tube furnace riser shaft and
in which rotary tube furnace inlet chamber (104, 204, 304) a bypass exhaust gas (105, 205, 305) is taken off in the region of the rotary tube furnace inlet chamber (104, 204, 304),
**characterized in that**
an apparatus for cooling of the bypass exhaust gas (105, 205, 305) cools the bypass exhaust gas (105, 205, 305) to a temperature in the range from 260°C to 400°C,
a downstream apparatus for injecting an ammonia-(NH₃⁺), urea- (CH₄N₂O) and/or ammonium-containing (NH₄⁺) substance into the cooled bypass exhaust gas (112, 212, 312), where the ammonia (NH₃) , the urea (CH₄N₂O) and/or the ammonium (NH₄⁺) at least partially converts the free-radical gas constituents present in the cooled bypass gas (112, 21, 312), for example nitrous gases and free-radical chlorine-oxygen compounds, into non-free-radical gas constituents by hydrolysis and/or partial oxidation and/or partial reduction, and
a downstream ceramic filter arrangement (114, 214, 314)
a) filters out the lithium fluoride (LiF), lithium chloride (LiCl), sodium fluoride (NaF), sodium chloride (NaCl), potassium chloride (KCl), lithium sulfate (Li₂SO₄), sodium sulfate (Na₂SO₄), potassium sulfate (K₂SO₄) and possibly further halides in the form of iodides (I⁻) and sulfates (SO₄⁻) of the alkaline earth metals Mg, Ca precipitated during the prior cooling of the bypass exhaust gas (112, 21, 312), and
b) chemically selectively reduces (SCR) the nitrogen oxides (NOₓ) which have not yet been converted by means of the ammonia- (NH₃), urea- (CH₄N₂O) and/or ammonium-containing (NH₄⁺) substance over a catalyst (116, 216, 316) present in the ceramic filter arrangement (114) and/or present directly downstream of the ceramic filter arrangement (214, 314),
where the catalyst (116, 216, 316) is arranged
b.1) on filter elements (117) of the ceramic filter arrangement (114),
b.2) on a separate support (216') integrated into the ceramic filter arrangement (214) and/or
b.3) directly downstream of the ceramic filter arrangement (314) in a dedicated reactor (316').

7. Plant according to Claim 6, **characterized in that** the catalyst (116, 216, 316) consists of titanium dioxide (TiO₂), vanadium pentoxide (V₂O₅) and tungsten dioxide (WO₂) or is a mixed catalyst made up of these which degrades dioxins (chlorinated and polychlorinated dibenzodioxins) and furans (chlorinated and polychlorinated dibenzofurans).

8. Plant according to Claim 6 or 7, **characterized in that** the residence time of the cooled bypass exhaust gases (112, 212, 312) in the line (113, 213, 313) between the cooling apparatus (109, 209, 309) and the ceramic filter arrangement (114, 214, 314) is selected by design of a line (113, 213, 313) so that the ammonia- (NH₃) , urea- (CH₄N₂O) and/or ammonium-containing (NH₄⁺) substance converts the free-radical gas constituents such as nitrous gases and free-radical chlorine-oxygen compounds present in the cooled bypass gas (112, 212, 312) into non-free-radical gas constituents to an extent of 50% by hydrolysis and/or partial oxidation and/or partial reduction, preferably to an extent of at least 70%, particularly preferably to an extent of at least 95%.

9. Plant according to any of Claims 6 to 7, **characterized in that** the apparatus for cooling the bypass exhaust gas (105, 205, 305) cools the bypass gas (105, 205, 305) to a temperature in the range from 280°C to 380°C.

10. Plant according to any of Claims 6 to 8, **characterized in that** a mixing chamber (109, 209, 309) mixes the bypass exhaust gas (105, 205, 305) with atmospheric air and/or water.

## Revendications

1. Procédé de dénitrification des gaz perdus de dérivation (105, 205, 305) dans une installation de fabrication de clinker de ciment, l'installation présentant, dans le sens d'écoulement des gaz, un four tubulaire tournant avant un calcinateur (102, 202, 302) pour le frittage du clinker de ciment (103, 203, 303), et le four tubulaire tournant (102, 202, 302) étant relié au calcinateur (107, 207, 307) pour la désacidification de la farine crue par une chambre d'entrée de four tubulaire tournant (104, 204, 304) ou par un puits ascendant de four tubulaire tournant, et
le gaz perdu de dérivation étant aspiré dans la région de la chambre d'entrée du four tubulaire tournant (104, 204, 304),
**caractérisé par**
- le refroidissement du gaz perdu de dérivation (105, 205, 305) à une température entre 260°C et 400°C dans un dispositif pour le refroidissement,
- l'injection d'une substance contenant de l'ammoniac (NH₃) , de l'urée (CH₄N₂O) et/ou des ions ammonium (NH₄⁺) dans le gaz perdu de dérivation refroidi (112, 21, 312),
l'ammoniac (NH₃) , l'urée (CH₄N₂O) et/ou les ions ammonium (NH₄⁺) transformant au moins partiellement, par hydrolyse et/ou par oxydation partielle et/ou par réduction partielle, les constituants gazeux radicalaires tels que les gaz nitreux et les composés radicalaires du chlore et de l'oxygène qui se trouvent dans le gaz de dérivation (112, 21, 312) en constituants gazeux non radicalaires,
- l'injection du gaz perdu de dérivation (112, 21, 312) refroidi et mélangé avec la substance contenant de l'ammoniac (NH₃) , de l'urée (CH₄N₂O) et/ou des ions ammonium (NH₄⁺) , dans un dispositif de filtration en céramique (114, 214, 314), dans lequel
a) lors du refroidissement précédent du gaz perdu de dérivation (112, 21, 312), du fluorure de lithium (LiF), du chlorure de lithium (LiCl), du fluorure de sodium (NaF), du chlorure de sodium (NaCl), du chlorure de potassium (KCl), du sulfate de lithium (Li₂SO₄), du sulfate de sodium (Na₂SO₄), du sulfate de potassium (K₂S0₄) et éventuellement d'autres halogénures sous forme d'iodures (I⁻) et de sulfates (SO₄⁻) des métaux alcalinoterreux Mg et Ca qui ont précipité, sont filtrés,
b) les oxydes d'azote (NOₓ) , qui n'ont pas encore été transformés par la substance contenant de l'ammoniac (NH₃), de l'urée (CH₄N₂O) et/ou des ions ammonium (NH₄⁺) , sont réduits chimiquement sélectivement (SCR - selective catalytic reduction - réduction catalytique sélective) à l'aide d'un catalyseur (116, 216, 316) présent dans le dispositif de filtration en céramique (114) et/ou suivant immédiatement le dispositif de filtration en céramique (214, 314),
le catalyseur pour la réduction chimique sélective (116, 216, 316) étant disposé
b.1) sur des éléments filtrants (117) du dispositif de filtration en céramique (114),
b.2) sur un support distinct (216') intégré dans le dispositif de filtration en céramique (214) et/ou
b.3) immédiatement après le dispositif de filtration en céramique (314) dans un réacteur individuel (316').

2. Procédé selon la revendication 1,
**caractérisé en ce que**
le catalyseur (116, 216, 316) est constitué de dioxyde de titane (TiO₂), de pentoxyde de vanadium (V₂O₅) et de dioxyde de tungstène (WO₂) ou est un catalyseur mixte correspondant, qui dégrade les dioxines (les dibenzodioxines chlorées ou polychlorées) et les furannes (dibenzofurannes chlorés et polychlorés).

3. Procédé selon la revendication 1 ou 2,
**caractérisé en ce que**
- le temps de séjour des gaz perdus de dérivation refroidis (112, 212, 312) dans une conduite (113, 213, 313) entre le dispositif pour le refroidissement (109, 209, 309) et le dispositif de filtration en céramique (114, 214, 314) est choisi de sorte que la substance contenant de l'ammoniac (NH₃), de l'urée (CH₄N₂O) et/ou des ions ammonium (NH₄⁺) transforme les constituants gazeux radicalaires tels que les gaz nitreux et les composés radicalaires du chlore et de l'oxygène qui se trouvent dans le gaz de dérivation refroidi (112, 212, 312) en constituants gazeux non radicalaires, à raison de 50%, par hydrolyse et/ou par oxydation partielle et/ou par réduction partielle, préférablement à raison d'au moins 70%, particulièrement préférablement à raison d'au moins 95%.

4. Procédé selon l'une quelconque des revendications 1 à 3,
**caractérisé par**
le refroidissement du gaz perdu de dérivation à une température entre 280°C et 380°C.

5. Procédé selon l'une quelconque des revendications 1 à 4,
**caractérisé par**
le mélange du gaz perdu de dérivation avec de l'air et/ou de l'eau dans une chambre de mélange (109, 209, 309).

6. Installation pour la fabrication de clinker de ciment,
présentant un four tubulaire tournant (102, 202, 302), qui est disposé dans le sens d'écoulement des gaz avant un calcinateur pour le frittage du clinker de ciment (103, 203, 303),
le four tubulaire tournant (102, 202, 302) étant relié au calcinateur (107, 207, 307) pour la désacidification de la farine crue par une chambre d'entrée de four tubulaire tournant (104, 204, 304) ou par un puits ascendant de four tubulaire tournant, et
dans laquelle chambre d'entrée du four tubulaire tournant (104, 204, 304), un gaz perdu de dérivation (105, 205, 305) est aspiré dans la région de la chambre d'entrée du four tubulaire tournant (104, 204, 304),
**caractérisée en ce que**
un dispositif pour le refroidissement du gaz perdu de dérivation (105, 205, 305) refroidit le gaz perdu de dérivation (105, 205, 305) à une température entre 260°C et 400°C,
un dispositif suivant pour l'injection d'une substance contenant de l'ammoniac (NH₃⁺), de l'urée (CH₄N₂O) et/ou des ions ammonium (NH₄⁺) dans le gaz perdu de dérivation refroidi (112, 212, 312), l'ammoniac (NH₃), l'urée (CH₄N₂O) et/ou les ions ammonium (NH₄⁺) transformant au moins partiellement, par hydrolyse et/ou par oxydation partielle et/ou par réduction partielle, les constituants gazeux radicalaires tels que les gaz nitreux et les composés radicalaires du chlore et de l'oxygène qui se trouvent dans le gaz de dérivation refroidi (112, 21, 312), en constituants gazeux non radicalaires, et
par un dispositif suivant de filtration en céramique (114, 214, 314)
a) qui filtre le fluorure de lithium (LiF), le chlorure de lithium (LiCl), le fluorure de sodium (NaF), le chlorure de sodium (NaCl), le chlorure de potassium (KCl), le sulfate de lithium (Li₂SO₄), le sulfate de sodium (Na₂SO₄), le sulfate de potassium (K₂S0₄) et éventuellement d'autres halogénures sous forme d'iodures (I⁻) et de sulfates (SO₄⁻) des métaux alcalinoterreux Mg et Ca qui ont précipité dans le refroidissement précédent du gaz perdu de dérivation (112, 21, 312), et
b) qui réduit chimiquement sélectivement (SCR) les oxydes d'azote (NOₓ), qui n'ont pas encore été transformés par la substance contenant de l'ammoniac (NH₃), de l'urée (CH₄N₂O) et/ou des ions ammonium (NH₄⁺), à l'aide d'un catalyseur (116, 216, 316) présent dans le dispositif de filtration en céramique (114) et/ou suivant immédiatement le dispositif de filtration en céramique (214, 314),
le catalyseur (116, 216, 316) étant disposé
b.1) sur des éléments filtrants (117) du dispositif de filtration en céramique (114),
b.2) sur un support distinct (216') intégré dans le dispositif de filtration en céramique (214) et/ou
b.3) immédiatement après le dispositif de filtration en céramique (314) dans un réacteur individuel (316').

7. Installation selon la revendication 6,
**caractérisée en ce que**
le catalyseur (116, 216, 316) est constitué de dioxyde de titane (TiO₂), de pentoxyde de vanadium (V₂O₅) et de dioxyde de tungstène (WO₂) ou est un catalyseur mixte correspondant, qui dégrade les dioxines (les dibenzodioxines chlorées ou polychlorées) et les furannes (dibenzofurannes chlorés et polychlorés).

8. Installation selon la revendication 6 ou 7,
**caractérisée en ce que**
par l'agencement d'une conduite (113, 213, 313), le temps de séjour des gaz perdus de dérivation refroidis (112, 212, 312) dans la conduite (113, 213, 313) entre le dispositif pour le refroidissement (109, 209, 309) et le dispositif de filtration en céramique (114, 214, 314) est choisi de sorte que la substance contenant de l'ammoniac (NH₃), de l'urée (CH₄N₂O) et/ou des ions ammonium (NH₄⁺) transforme les constituants gazeux radicalaires tels que les gaz nitreux et les composés radicalaires du chlore et de l'oxygène qui se trouvent dans le gaz de dérivation refroidi (112, 212, 312) en constituants gazeux non radicalaires, à raison de 50%, par hydrolyse et/ou par oxydation partielle et/ou par réduction partielle, préférablement à raison d'au moins 70%, particulièrement préférablement à raison d'au moins 95%.

9. Installation selon l'une quelconque des revendications 6 à 7,
**caractérisée en ce que**
le dispositif pour le refroidissement du gaz perdu de dérivation (105, 205, 305) refroidit le gaz de dérivation (105, 205, 305) à une température entre 280°C et 380°C.

10. Installation selon l'une quelconque des revendications 6 à 8,
**caractérisée en ce que**
une chambre de mélange (109, 209, 309) mélange le gaz perdu de dérivation (105, 205, 305) avec de l'air atmosphérique et/ou de l'eau.
